# EUROPÄISCHE PATENTANMELDUNG

(11) **EP 2 913 867 A1**
(43) Veröffentlichungstag der Anmeldung: **02.09.2015**
(21) Anmeldenummer: 15150419.8
(22) Anmeldetag: 08.01.2015
(51) Int. Cl.: H01M 2/20, H01M 2/10, B60L 11/18, B62M 6/90, H01M 10/48, B60R 16/04, B60K 1/04

(54) **Batterie und Fahrzeug, insbesondere Elektrofahrrad**

(30) Priorität: 28.02.2014 DE 102014203643
(71) Anmelder: ROBERT BOSCH GMBH, 70442 Stuttgart (DE)
(72) Erfinder: Imre, Arpad, 71665 Vaihingen (DE)

(57) **Zusammenfassung**

Die vorliegende Erfindung betrifft eine Batterie umfassend wenigstens eine erste und eine zweite Batteriezelle (12), welche in Reihe angeordnet sind, einen flexiblen Zellverbinder (13), welcher die erste Batteriezelle (12) mit der zweiten Batteriezelle (12) verbindet und ein flexibles Schlauchelement (14), welches die erste und zweite Batteriezelle (12) und den flexiblen Zellverbinder (13) umschließt.

## Beschreibung

### Stand der Technik

Die vorliegende Erfindung betrifft eine Batterie sowie ein mit Muskelkraft und/oder elektrischer Kraft betreibbares Fahrzeug, insbesondere Elektrofahrrad.

Batterien zur Energiespeicherung werden in jüngster Zeit in verschiedensten Ausgestaltungen verwendet. Die bekannten Batterien sind dabei unflexible, quaderförmige Blöcke, welche für den jeweiligen Einsatzbereich und den dort vorhandenen Bauraum ausgelegt werden. Ein aktuelles Anwendungsgebiet von Batterien sind beispielsweise mit Muskelkraft und/oder elektrischer Kraft betreibbare Fahrzeuge, z.B. Elektrofahrräder. Um eine gewisse Reichweite derartiger Elektrofahrräder sicherstellen zu können, muss eine entsprechend große Batterie verbaut werden, welche üblicherweise außen am Fahrradrahmen oder an einem Gepäckträger angeordnet werden kann. Auch wird versucht, durch Vergrößerung von Rahmenrohren, die Batterien im Inneren des Rahmens zu verstecken. Dies führt jedoch häufig zu optisch unansprechenden Rahmendesigns der Elektrofahrräder. Ein weiteres Problem für Batteriehersteller liegt dabei darin, dass die Elektrofahrräder häufig unterschiedlichste Rahmen aufweisen, so dass für jeden Hersteller bzw. jeden Fahrradtyp eine eigene Batterie konstruiert werden muss. Dies ist sehr zeit- und kostenintensiv und verteuert derartige Produkte.

### Offenbarung der Erfindung

Die erfindungsgemäße Batterie mit den Merkmalen des Anspruchs 1 weist demgegenüber den Vorteil auf, dass sie einfach und kostengünstig aufgebaut ist und dabei höchste Flexibilität aufweist. Hierbei kann die erfindungsgemäße Batterie beispielsweise gebogen und so auch in verschiedensten Bauräumen angeordnet werden. Dies wird erfindungsgemäß dadurch erreicht, dass die Batterie wenigstens eine erste und zweite Batteriezelle aufweist, welche in Reihe angeordnet sind. Ferner umfasst die Batterie einen flexiblen Zellverbinder, welcher die erste und zweite Batteriezelle elektrisch miteinander verbindet. Darüber hinaus ist erfindungsgemäß ein flexibles Schlauchelement vorgesehen, welches die erste und zweite Batteriezelle und den Zellverbinder umschließt. Durch die Verwendung des flexiblen Schlauchelements und des Zellverbinders kann somit eine hohe Flexibilität und Biegbarkeit erreicht werden, wobei der Aufbau der Batteriezelle starr sein kann und die Batterie einen relativ geringen Querschnitt aufweist. Ferner ist durch den schlauchförmigen Aufbau eine sehr gute passive Kühleigenschaft möglich, da ein großes Verhältnis von Fläche zu Volumen vorhanden ist. Auch kann durch die erfindungsgemäße Verteilung der Batterieenergie in schlauchartiger Weise eine höhere Sicherheit für das Fahrzeug erreicht werden.

Die Unteransprüche zeigen bevorzugte Weiterbildungen der Erfindung.

Vorzugsweise sind die Batteriezellen der Batterie in Reihe geschaltet und flexible Zellverbinder verbinden jeweils benachbarte Batteriezellen elektrisch miteinander. Hierdurch ergibt sich ein besonders einfacher und kostengünstiger Aufbau.

Weiter bevorzugt sind zwischen den Batteriezellen und dem Schlauchelement, insbesondere fluiddichte Verbindungen vorgesehen. Dies kann beispielsweise durch eine direkte Verbindung der Innenseite des Schlauchelements mit der Außenseite der Batteriezelle ermöglicht werden. Das Schlauchelement kann beispielsweise auch mittels eines Klebstoffs oder dergleichen auf die Außenseite der Batteriezelle aufgeklebt werden. Auch kann ein Material des Schlauchelements derart gewählt werden, dass dieses beispielsweise durch Erwärmen unmittelbar an der Außenseite der Batteriezellen anhaftet und somit die Abdichtung bereitstellt.

Vorzugsweise weist das flexible Schlauchelement einen kreisförmigen Querschnitt auf. Alternativ weist das flexible Schlauchelement einen rechteckigen Querschnitt auf. Der Querschnitt des flexiblen Schlauchelements hängt selbstverständlich insbesondere von der Form der Batteriezellen ab. Diese können zylindrisch oder rechteckig oder prismatisch oder als Pouch ausgebildet sein.

Um eine besonders sichere Kontaktierung zu ermöglichen ist der Zellverbinder mit den Batteriezellen mittels einer Schweißverbindung, beispielsweise einer Laserschweißverbindung oder einer Ultraschallschweißverbindung oder einer Widerstandsschweiß-Verbindung, oder einer Klebeverbindung oder einer Klemmverbindung oder einem zerstörungsfrei lösbaren losen direkten Kontakt ausgebildet. Die Kontaktierung ist dabei derart, dass bei in Reihe geschalteten Batteriezellen der Zellverbinder sowohl die elektrische Verbindung zwischen benachbarten Batteriezellen übernimmt als auch die mechanische flexible Verbindung zwischen benachbarten Batteriezellen übernimmt.

Wenn der Zellverbinder auch die elektrische Verbindung benachbarter Batteriezellen übernimmt, ist der Zellverbinder vorzugsweise ein biegbares, elektrisch leitfähiges Element, insbesondere ein Draht oder eine Fahne oder dergleichen oder ein elektrisch leitbares Federelement, z.B. eine Schraubenfeder oder eine Kegelfeder oder eine Evolutfeder.

Besonders bevorzugt sind die Batteriezellen im flexiblen Schlauchelement als genau in einer Reihe angeordnete Batteriezellenanordnung vorgesehen. Alternativ sind die Batteriezellen im flexiblen Schlauchelement in Form einer zweireihigen Batteriezellenanordnung angeordnet, wobei eine erste Batteriezellenreihe und eine zweite Batteriezellenreihe parallel zueinander angeordnet sind und beide Batteriezellenreihen vorzugsweise von einem gemeinsamen flexiblen Schlauchelement umschlossen sind.

Weiter bevorzugt umfasst das flexible Schlauchelement eine Sensoreinrichtung. Die Sensoreinrichtung ist beispielsweise ein Temperatursensor oder ein Spannungssensor um eine Spannung der Batteriezellen zu erfassen. Die Sensoreinrichtung kann beispielsweise in Öffnungen, die im flexiblen Schlauchelement vorgesehen sind, angeordnet werden.

Das Material des Schlauchelements ist vorzugsweise elektrisch isolierend und weiter bevorzugt thermisch gut leitend. Zum Beispiel kann als Material ein mit Aluminiumoxid versetztes gummiartiges Material verwendet werden.

Weiterhin betrifft die vorliegende Erfindung ein mit Muskelkraft und/oder elektrischer Kraft betreibbares Fahrzeug, insbesondere ein Elektrofahrrad, welches eine erfindungsgemäße Batterie umfasst. Das Fahrzeug umfasst besonders bevorzugt einen Rahmen, insbesondere einen Fahrradrahmen, wobei die Batterie im Rahmen angeordnet ist. Dadurch kann die Batterie, welche aufgrund der Verwendung des flexiblen Schlauchelements eine schlauchförmige Form aufweist, sehr gut im Rahmen unsichtbar für den Nutzer angeordnet werden. Besonders bevorzugt umfasst der Rahmen des Fahrzeugs wenigstens ein erstes und zweites Rahmenrohr, wobei die Batterie wenigstens im ersten und zweiten Rahmenrohr angeordnet ist. Aufgrund der Biegsamkeit der erfindungsgemäßen Batterie kann diese auch in verschiedenen Rahmenrohren angeordnet werden, indem sie über ein Rahmenrohr in den Rahmen eingeschoben wird und nach Ausfüllen des ersten Rahmenrohrs in das zweite Rahmenrohr umgelenkt wird. Hierdurch kann auch eine einfache Verteilung der Batterieenergie im Rahmen des Fahrzeugs ermöglicht werden und somit eine verbesserte Sicherheit und insbesondere eine reduzierte Wärmeproblematik erreicht werden.

### Kurze Beschreibung der Zeichnungen

Nachfolgend werden Ausführungsbeispiele der Erfindung unter Bezugnahme auf die begleitende Zeichnung im Detail beschrieben. Gleiche bzw. funktional gleiche Teile sind dabei mit den gleichen Bezugszeichen bezeichnet. In der Zeichnung ist:
- Figur 1: eine schematische Darstellung eines Elektrofahrrads mit einer Batterie gemäß einem ersten Ausführungsbeispiel der Erfindung,
- Figur 2: eine schematische Darstellung der Batterie von Figur 1 im Längsschnitt,
- Figur 3: eine schematische Darstellung der Batterie von Figur 1 im Querschnitt,
- Figuren 4 und 5: schematische Querschnittsansichten von alternativen Formen des flexiblen Schlauchelements,
- Figur 6: eine schematische Längsschnittansicht einer Batterie gemäß einem zweiten Ausführungsbeispiel der Erfindung und
- Figur 7: eine schematische Längsschnittansicht einer Batterie gemäß einem dritten Ausführungsbeispiel der Erfindung.

### Ausführungsformen der Erfindung

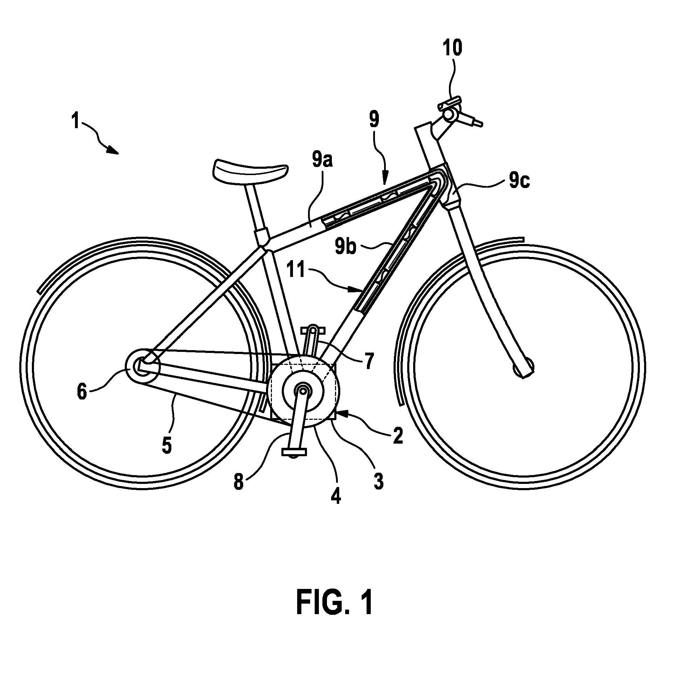

Nachfolgend wird unter Bezugnahme auf die Figuren 1 bis 3 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8 an denen Pedale angeordnet sind. Ein elektrischer Antrieb 3 ist im Bereich des Kurbeltriebs 2 angeordnet. Am Kurbeltrieb 2 ist ferner ein Kettenblatt 4 angeordnet, welches über eine Kette 5 und ein Ritzel 6 am Hinterrad eine Antriebskraft überträgt.

Am Lenker des Elektrofahrrads ist eine Steuereinheit 10 angeordnet, welche mit dem elektrischen Antrieb 3 verbunden ist. Das Bezugszeichen 11 bezeichnet eine Batterie, welche im Rahmen 9 des Elektrofahrrads 1 angeordnet ist.

Die Steuereinheit 10 des Elektrofahrrads kann derart eingerichtet sein, dass das Fahrrad ausschließlich mit Muskelkraft betreibbar ist, oder dass das Fahrrad durch eine Kombination von Muskelkraft und elektrischer Kraft betreibbar ist. Ein derartiges Elektrofahrrad wird auch als Pedelec bezeichnet. Alternativ kann die Steuereinheit 10 ferner derart eingerichtet sein, dass das Elektrofahrrad 1 auch ausschließlich mit elektrischer Kraft betrieben werden kann.

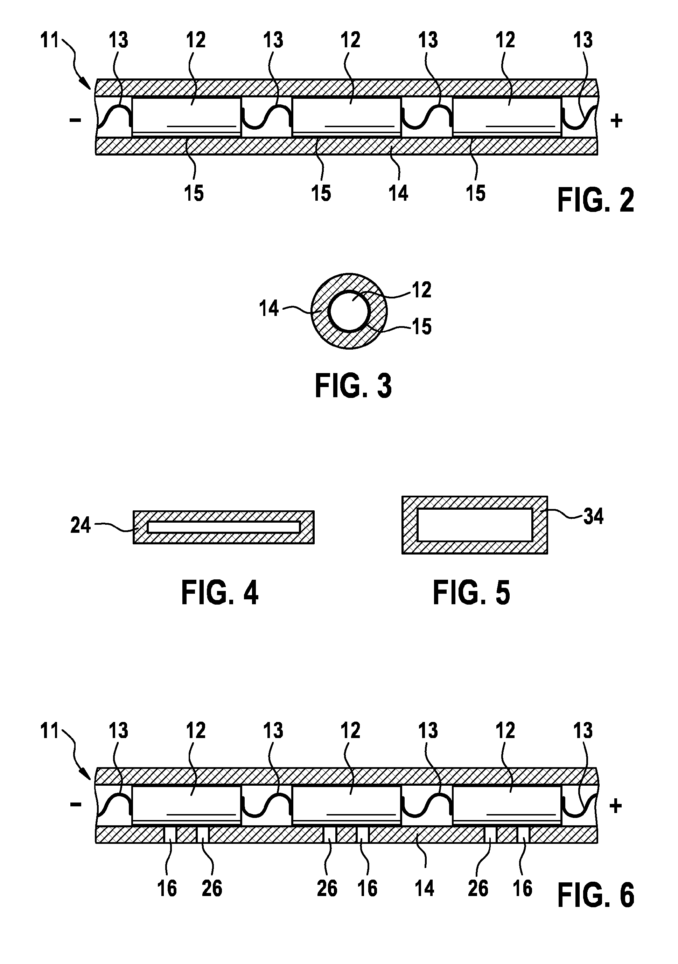

Die Batterie 11, welche im Rahmen 9 des Elektrofahrrads 1 angeordnet ist, ist im Detail in den Figuren 2 und 3 dargestellt. Wie aus Figur 2 ersichtlich ist, umfasst die Batterie 11 eine Vielzahl von Batteriezellen 12, welche in Reihe angeordnet sind. Die Batteriezellen 12 sind ferner auch in Reihe verschaltet. Die Verschaltung erfolgt hierbei über elektrisch leitfähige, flexible Zellverbinder 13. Die Batterie 1 umfasst ferner ein flexibles Schlauchelement 14, welches die Batteriezellen 12 und die Zellverbinder 13 aufnimmt. Hierdurch weist die Batterie einen schlauchförmigen Aufbau auf. Dadurch kann die schlauchförmige Batterie 11 problemlos in Rahmenrohren 9a, 9b des Rahmens 9 des Elektrofahrrads angeordnet werden, wie in Figur 1 schematisch dargestellt. Aufgrund der Flexibilität und Biegbarkeit der Batterie 11 kann diese auch um Biegungen, wie in Figur 1 am Steuerrohr 9c dargestellt, angeordnet werden.

Die Batteriezellen 12 sind zylindrisch aufgebaut und eine Verbindung 15 ist zwischen einem Außenumfang der Batteriezellen 12 und einem Innenumfang des Schlauchelements 14 vorgesehen. Die Verbindung 15 kann beispielsweise eine Klebeverbindung sein oder eine Haftverbindung des Schlauchelements 14 an den Batteriezellen 12, beispielsweise durch Wärmeeinwirkung nach erfolgter Montage der Batterie.

Somit kann erfindungsgemäß die Batterie 11 vollständig im Rahmen 9 des Elektrofahrrads angeordnet werden, ohne dass klobige Batterieelemente am Rahmen oder am Gepäckträger oder an anderen Positionen außerhalb des Fahrradrahmens angeordnet werden müssen. Wie ferner aus Figur 2 ersichtlich ist, weist die erfindungsgemäße Batterie 11 überdies einen modularen Aufbau auf, so dass die Batterie entsprechend einer gewünschten Reichweite des Elektrofahrrads aufgebaut sein kann.

Die Zellverbinder 13 dieses Ausführungsbeispiels sind aus elektrisch leitfähigem Draht vorgesehen. Es sei jedoch angemerkt, dass die Zellverbinder beispielsweise auch Federelemente sein können. Die Zellverbinder 13 dieses Ausführungsbeispiels stellen weiterhin einen gewissen Abstand zwischen den einzelnen Batteriezellen 12 bereit, so dass eine hohe Flexibilität der Batterie gegeben ist. Weiterhin sichern die Zellverbinder 13 auch die elektrische Verbindung zwischen benachbarten Batteriezellen 12, welche in Reihe geschaltet sind. Das Schlauchelement 14 bildet somit eine schlauchartige flexible Hülle und kann aus verschiedenartigen, isolierenden Materialien hergestellt sein, z.B. aus Gummi oder Kunststoff oder alternativ auch als Schrumpfschlauch. Die beiden freien Enden der schlauchförmigen Batterie 11 sind vorzugsweise abgedichtet und weisen einen Anschlusskontakt oder einen Stecker oder dergleichen auf.

Somit kann erfindungsgemäß eine schlauchartige Batterie 11 vorgesehen werden, welche aus kleinen Einheiten bzw. Modulen aufgebaut ist und in unterschiedlichsten Abmessungen an verschiedenste Einsatzzwecke angepasst werden kann. Durch die Flexibilität der Batterie 11 können auch geometrisch schwierige Bauräume mit Biegungen und dergleichen mit der Batterie bestückt werden.

Die Figuren 4 und 5 zeigen zwei alternative Ausgestaltungen eines Querschnitts des Schlauchelements, wobei in Figur 4 ein Schlauchelement 24 für eine Batteriezelle in Form eines Pouchs dargestellt ist und in Figur 5 ein Schlauchelement 34 in rechteckiger Form für eine Batteriezelle mit rechteckiger Gestalt dargestellt ist.

Figur 6 zeigt eine Batterie 11 gemäß einem zweiten Ausführungsbeispiel der Erfindung bei der Batterie 11 des zweiten Ausführungsbeispiels sind im Schlauchelement 14 ferner Sensoreinrichtungen angeordnet. Genauer sind im Schlauchelement 14 Temperatursensoren 16 angeordnet, um eine Temperatur einer Batteriezelle 12 zu bestimmen. Ferner sind im Schlauchelement 14 Spannungssensoren 26 angeordnet, um eine elektrische Spannung der Batteriezellen 12 zu bestimmen.

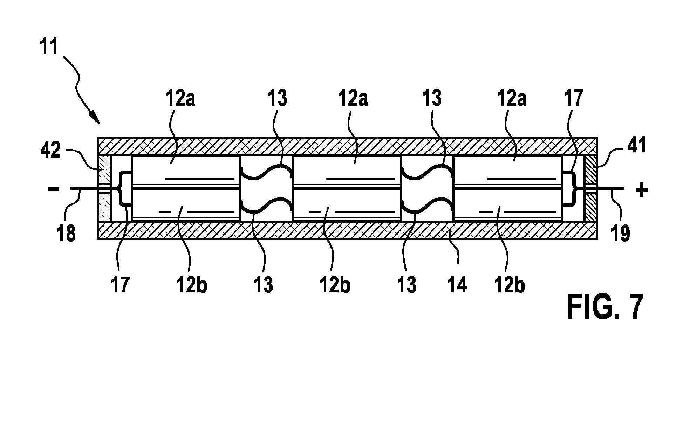

Figur 7 zeigt eine Batterie 11 gemäß einem dritten Ausführungsbeispiel der Erfindung. Beim dritten Ausführungsbeispiel der Erfindung wurde eine Kapazität der Batterie 11 erhöht, indem zwei Reihen von Batteriezellen nebeneinander angeordnet sind, welche von einem gemeinsamen Schlauchelement 14 umgeben sind. Genauer ist eine erste Reihe von Batteriezellen 12a in Reihe angeordnet und eine zweite Reihe von Batteriezellen 12b ist parallel hierzu angeordnet. Die beiden Reihen von Batteriezellen 12a, 12b sind jeweils in Reihe geschaltet. An den beiden Enden der Batterie 11 sind jeweils Anschlüsse 18, 19 vorgesehen, welche durch Endstücke 41, 42 hindurchgeführt sind. Die Anschlüsse werden über Verzweigungs-/ Zusammenführungselemente 17 mit den beiden Reihen von Batteriezellen 12a, 12b elektrisch kontaktiert. Die Endbereiche 41, 42 dichten dabei das Schlauchelement 14 ab.

## Patentansprüche

1. Batterie umfassend
- wenigstens eine erste und eine zweite Batteriezelle (12), welche in Reihe angeordnet sind,
- einen flexiblen Zellverbinder (13), welcher die erste Batteriezelle (12) mit der zweiten Batteriezelle (12) verbindet und
- ein flexibles Schlauchelement (14), welches die erste und zweite Batteriezelle (12) und den flexiblen Zellverbinder (13) umschließt.

2. Batterie nach Anspruch 1, **dadurch gekennzeichnet, dass** die Batteriezellen in Reihe geschaltet sind und flexible Zellverbinder (13) benachbarte Batteriezellen (12) elektrisch miteinander verbinden.

3. Batterie nach einem der vorhergehenden Ansprüche, **dadurch gekennzeichnet, dass** zwischen den Batteriezellen (12) und dem Schlauchelement (14) eine Verbindung (15), insbesondere eine Klebeverbindung oder eine Schweißverbindung, ausgebildet ist.

4. Batterie nach einem der vorhergehenden Ansprüche, **dadurch gekennzeichnet, dass** das flexible Schlauchelement (14) einen kreisförmigen Querschnitt oder einen rechteckigen Querschnitt aufweist.

5. Batterie nach einem der vorhergehenden Ansprüche, **dadurch gekennzeichnet, dass** zwischen dem Zellverbinder (13) und den Batteriezellen (12) eine Schweißverbindung oder eine Klebeverbindung oder eine Klemmverbindung oder eine Verbindung über einen zerstörungsfrei lösbaren losen Kontakt ausgebildet ist.

6. Batterie nach einem der vorhergehenden Ansprüche, **dadurch gekennzeichnet, dass** der Zellverbinder (13) ein biegbares Element, insbesondere ein Draht oder eine Fahne oder dergleichen, oder ein Federelement ist.

7. Batterie nach einem der vorhergehenden Ansprüche, **dadurch gekennzeichnet, dass** die Batteriezellen (12) im Schlauchelement (14) genau eine einreihige Batteriezellenanordnung bilden.

8. Batterie nach einem der Ansprüche 1 bis 6, **dadurch gekennzeichnet, dass** die Batteriezellen (12) im Schlauchelement (14) eine zweireihige Batteriezellenanordnung mit einer ersten Batteriezellenreihe und einer zweiten Batteriezellenreihe bilden.

9. Batterie nach einem der vorhergehenden Ansprüche, **dadurch gekennzeichnet, dass** das Schlauchelement (14) eine Sensoreinrichtung, insbesondere einen Temperatursensor (16) und/oder einen Spannungssensor (26), umfasst.

10. Mit Muskelkraft und/oder elektrischer Kraft betreibbares Fahrzeug, insbesondere Elektrofahrrad, umfassend eine Batterie nach einem der vorhergehenden Ansprüche.

11. Fahrzeug nach Anspruch 10, umfassend einen Rahmen (9), insbesondere einen Fahrradrahmen, wobei die Batterie (11) im Rahmen angeordnet ist.

12. Fahrzeug nach Anspruch 11, **dadurch gekennzeichnet, dass** der Rahmen (9) wenigstens ein erstes und zweites Rahmenrohr (9a, 9b) umfasst und die Batterie (11) wenigstens im ersten und zweiten Rahmenrohr angeordnet ist.
